# EUROPEAN PATENT APPLICATION

(11) **EP 3 264 310 A1**
(43) Date of publication of application: **03.01.2018**
(21) Application number: 17174371.9
(22) Date of filing: 02.06.2017
(51) Int. Cl.: G06F 21/52, G06F 21/56, H04L 29/06

(54) **COMPUTER ATTACK MODEL MANAGEMENT**

(30) Priority: 01.07.2016 US 201615201171
(71) Applicant: EntIT Software LLC, Sunnyvale, California 94089 (US)
(72) Inventor: Reinecke, Philipp, Bristol, BS34 8QZ (GB); Casassa Mont, Marco, Bristol, BS34 8QZ (GB); Beresna, Yolanta, Bristol, BS34 8QZ (GB)
(74) Representative: HGF Limited

(57) **Abstract**

Examples relate to computer attack model management. In one example, a computing device may: identify a first set of attack models, each attack model in the first set specifying behavior of a particular attack on a computing system; obtain, for each attack model in the first set, performance data that indicates at least one measure of attack model performance for a previous use of the attack model in determining whether the particular attack occurred on the computing system; and update the first set of attack models based on the performance data.

## Description

### BACKGROUND

Computing systems of all types are frequently targeted by a variety of attacks from malicious entities. Computer attacks may be difficult to prevent, detect, and remediate, and several options exist for defending computing systems, such as firewalls, antivirus software, and network intrusion detection devices. Analytical devices and methods are also used to identify computer attacks at various stages, e.g., using symptoms or signatures of known attacks.

### BRIEF DESCRIPTION OF THE DRAWINGS

The following detailed description references the drawings, wherein:
FIG. 1 is a block diagram of an example computing device for computer attack model management.
FIG. 2 is an illustration of an example attack model.
FIG. 3 is an illustration of example attack model state diagrams.
FIG. 4 is a data flow depicting an example of computer attack model management.
FIG. 5 is a flowchart of an example method for performing computer attack model management.

### DETAILED DESCRIPTION

Computer attack models may be used to drive detection, tracking, and prediction of malware and other malicious attacks on a computing system. The behavior of attacks on computer systems, whether a single computer or a large network of many computing devices, can be modeled at a high level. For example, the high level behavior of a data exfiltration attack - where an attack attempts an unauthorized export of some type of data from a computing system - can be modeled in a way that captures most data exfiltration attacks. E.g., such an attack may begin with an infection phase, followed by a discovery phase, then a lateral movement phase, and finally a data exfiltration phase. An attack model may include a variety of information that describes potential actions that could be taken in any given phase, or state, of an attack.

Attack models may be used to generate a hypothesis about the state of an attack on a computing system. In general, a hypothesis may be an instance of an attack model, where an assumption is made about the state of the computing system and/or attack actions that have taken place. The hypothesis, or attack model instance, may be generated in a variety of ways. For example, the hypothesis may be based on contextual information known about the computing system, queries to specific devices or databases containing information about the computing system, and particular model mechanisms, such as probabilistic and/or pseudo-random decisions regarding predicted attack actions. Using the aforementioned information, an actual hypothesis may specify predicted attack actions that have taken place.

To test the hypothesis, an analytics device may select particular analytics functions that are designed to determine whether particular actions are occurring or have previously occurred. For example, a hypothesis generated from a data exfiltration attack model may specify that a command and control channel was established within the computing system using a domain name generating algorithm to find a command and control server. One or more analytics functions that are designed to detect domain name generation algorithms may be used to determine whether one was used within the computing system. Other attack actions included in the hypothesis, such as the installation of a remote access Trojan (RAT) and ongoing command and control communication, may be associated with other analytics functions designed to determine whether those actions occurred or are actively occurring.

Analytics results may be used to update the state of an attack model instance, e.g., by updating the attack model instance used to form the hypothesis. For example, in situations where the analytics results indicate that the hypothesis correctly predicted that a RAT was installed and that a domain generation algorithm was used, lack of ongoing command and control communications may indicate that an attack was either already completed on the computer system or had advanced to a different phase, such as a lateral movement or data exfiltration phase. Updates to the attack model instance may then lead to a new hypothesis regarding the state of the attack on the computing system, which may again be tested using different analytics functions.

The attack model instances, as updated, may be used to predict the state of an attack on the computing system. Information regarding the state of a particular attack, including a prediction or confidence that the attack occurred, may be used in a variety of ways. In some implementations administrators and/or users of the computing system may be notified of a predicted attack based on the results of analytics performed during the attack modeling steps described above. In some implementations, remedial action(s) may be initiated in response to determining a particular attack occurred, or may have occurred, on the computing system.

While many different attack models may be used to evaluate a computing system, not all attack models are as successful at detecting malware and some attack models may be overly resource intensive. Based on a variety of triggering conditions, attack models may be updated based on their performance. For example, multiple data exfiltration attack models may be available for use by an attack modeling device; however, one may take longer to run, use more computing resources to process, and be less successful than other data exfiltration attack models. In this situation, that particular attack model may be removed or altered in a manner designed to promote using more efficient and successful attack models. Further details regarding computer attack model management are provided in the paragraphs that follow.

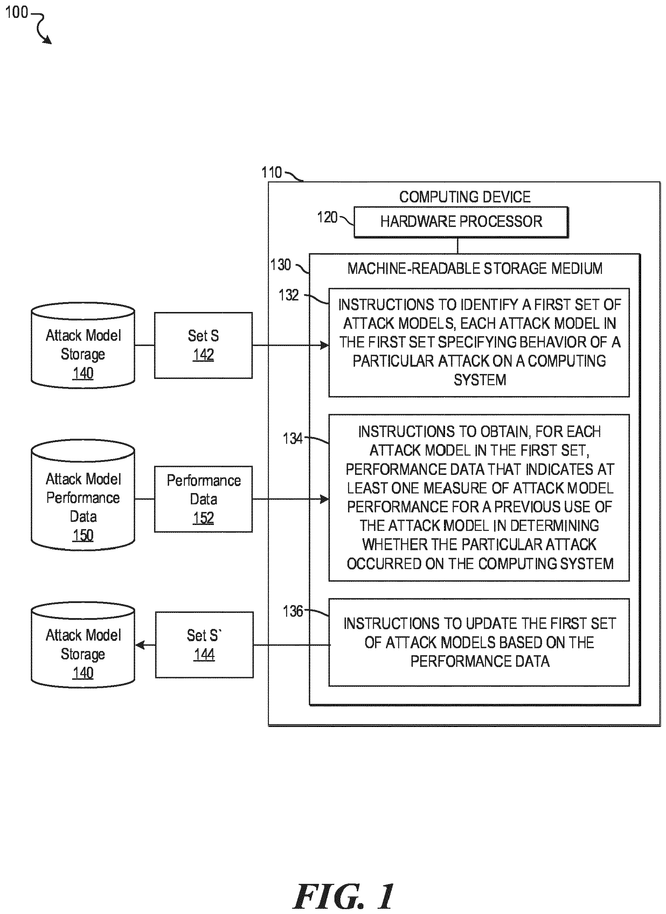

Referring now to the drawings, FIG. 1 is a block diagram 100 of an example computing device 110 for computer attack model management. Computing device 110 may be, for example, a personal computer, a server computer, mobile computing device, network device, or any other similar electronic device capable of handling data, e.g., to manage computer attack models. In the example implementation of FIG. 1, the computing device 110 includes a hardware processor, 120, and machine-readable storage medium, 130.

Hardware processor 120 may be one or more central processing units (CPUs), semiconductor-based microprocessors, and/or other hardware devices suitable for retrieval and execution of instructions stored in machine-readable storage medium, 130. Hardware processor 120 may fetch, decode, and execute instructions, such as 132-136, to control processes for computer attack model management. As an alternative or in addition to retrieving and executing instructions, hardware processor 120 may include one or more electronic circuits that include electronic components for performing the functionality of one or more instructions, e.g., a Field Programmable Gate Array (FPGA) or Application Specific Integrated Circuit (ASIC).

A machine-readable storage medium, such as 130, may be any electronic, magnetic, optical, or other physical storage device that contains or stores executable instructions. Thus, machine-readable storage medium 130 may be, for example, Random Access Memory (RAM), non-volatile RAM (NVRAM), an Electrically Erasable Programmable Read-Only Memory (EEPROM), a storage device, an optical disc, and the like. In some implementations, storage medium 130 may be a non-transitory storage medium, where the term "non-transitory" does not encompass transitory propagating signals. As described in detail below, machine-readable storage medium 130 may be encoded with executable instructions: 132-136, for computer attack model management.

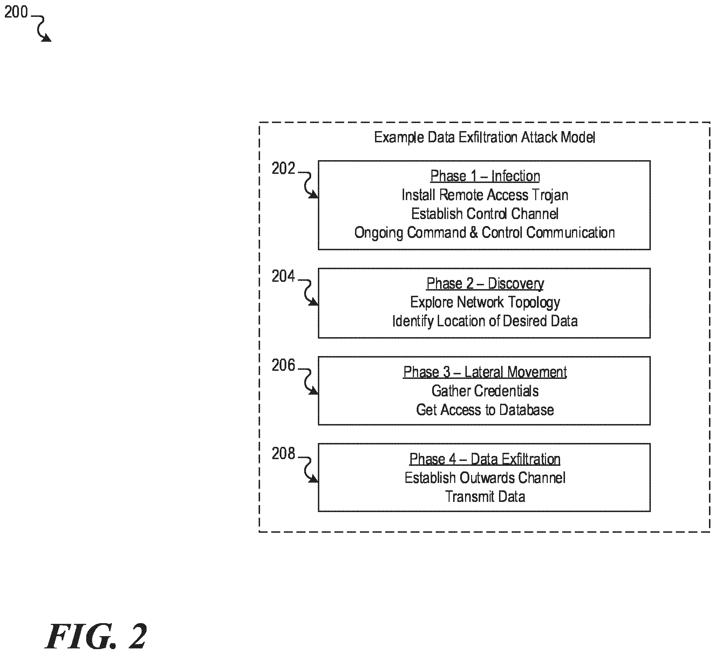

An illustration of an example attack model 200 is depicted in FIG. 2. The example attack model specifies, for each of four phases, attack actions that may occur during a data exfiltration attack, e.g., an attack designed to transfer data from a target computing system. Phase 1 202, the infection phase, specifies three actions that may occur when an attack tries to infect a computing system: i) install remote access Trojan (RAT), ii) establish a control channel, and iii) ongoing command and control communication. For example, during the infection phase, an attacker may first install a RAT on a device inside a network of computing devices. This may be achieved by convincing a user to download and execute an infected file from a website or e-mail. Next, the attack establishes a control channel for the RAT, which may be achieved by connecting to a remote command and control server. The RAT may use a domain generation algorithm to find a command and control server, or the RAT may download commands from a predetermined website.

Phase 2 204, the discovery phase, specifies two attack actions used to discover, within the infected computing system, a target for data exfiltration: i) explore network topology, and ii) identify location of desired data. For example, during this phase, the attacker may decide to explore the network topology of the computing system to identify the location of desired data. Exploration of the network topology may be performed by pinging reachable systems, port scanning, exploiting vulnerabilities, observing and mimicking user behaviors, etc. The location of the data can be identified by looking for shared resources in the network or by analyzing content stored by various host devices.

Phase 3 206, the lateral movement phase, specifies two attack actions used to gain access to a particular device, e.g., the device that stores data of interest: i) gather credentials, and ii) get access to database. For example, during the lateral movement phase, the attacker attempts to gain access to a machine that stores the desired data. This may be achieved by gathering valid user credentials or by exploiting a vulnerability in the target machine's software.

Phase 4 208, the data exfiltration phase, specifies two attack actions used to send the target data to a third party: i) establish outwards channel, and ii) transmit data. For example, during this phase, data exfiltration may be performed using DNS data exfiltration techniques, sending e-mail, uploading data to a remote machine via HTTP/HTTPS, or by storing the data on a cloud service.

Other data exfiltration attack models, aside from the example data exfiltration attack model 200, may be used for data exfiltration attacks. Other data exfiltration attack models may specify different attack actions and/or different phases; attack models need not include all actions or phases of a given attack. In addition, attack models may exist for many different types of attacks, such as DDOS attacks, attacks designed to destroy rather than export data, ransomware attacks, etc. The granularity of attack models may also differ across different attack models. The example attack model 200 is relatively high level, without specificity as to the exact attack actions used or the exact devices within the computing system that perform the attack actions. In some implementations, attack models may specify behavior for a particular type of device within a computing system, e.g., domain name generation algorithm usage on server client computing device.

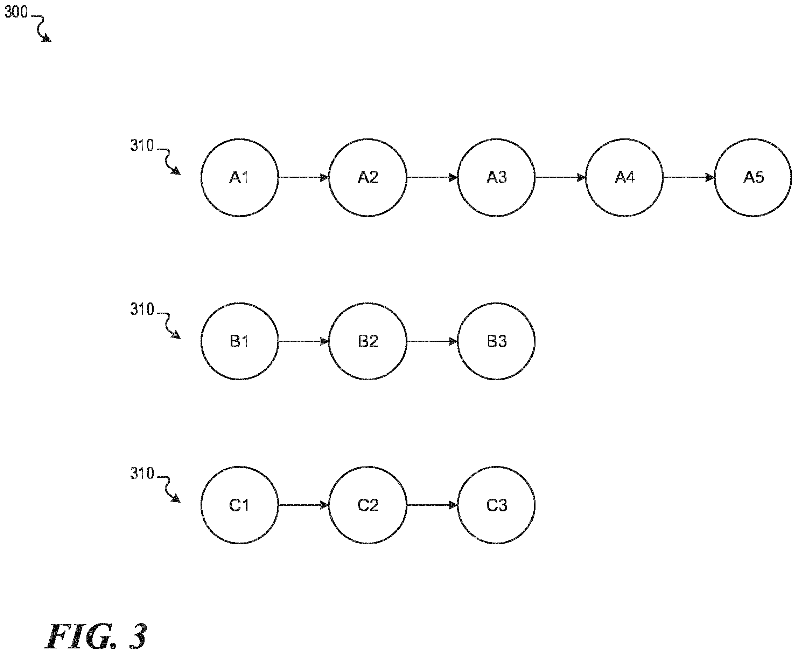

FIG. 3 depicts an illustration of example attack model state diagrams 300 for several example attack models. The state diagrams 300 are high level representations of attack model phases, e.g., for data exfiltration attack models. By way of example, the first diagram 310 may be for a first type of data exfiltration attack model that has 5 phases/states, A1-A5, e.g., infection, idle, discovery, lateral movement, and data exfiltration. The second diagram 320 may be for a second type of data exfiltration attack model that has 3 phases/states, B1-B3, e.g., infection, lateral movement, and data exfiltration. The third diagram 330 may be for a third type of data exfiltration attack model that also has 3 phases/states, C1-C3, e.g., discovery, lateral movement, and idle.

In an example of computer attack model management, as shown in FIG. 1, the hardware processor 120 executes instructions 132 to identify a first set of attack models, each attack model in the first set specifying behavior of a particular attack on a computing system. In the example block diagram 100, the first set of attack models, Set S 142, is identified from a device for attack model storage 140. In some implementations, each model in the first set is for the same type of computer attack. For example, the attack models included in Set S 142 may be data exfiltration attack models, such as the three attack models represented by the state diagrams 300 of FIG. 3. In some implementations, attack models in the first set are selected using clustering. For example, attack models may be clustered based on characteristics, such as the number of states, number of attack actions, or performance of the attack models. E.g., the computing device 110 may cluster attack models that perform poorly and select that cluster as the first set of attack models.

The hardware processor 120 executes instructions 134 to obtain, for each attack model in the first set, performance data 152 that indicates at least one measure of attack model performance for a previous use of the attack model in determining whether the particular attack occurred on the computing system. Attack model performance may indicate how well the attack model performs as a whole and/or how well the analytics perform for individual attack actions of the attack models. In the example block diagram 100, the performance data 152 is obtained from a storage devices for attack model performance data 150. In some implementations, the performance data 152 includes resource usage measurements, analytics results data, and/or user feedback. The resource usage measurements may indicate the computing resources used to execute analytics for actions specified by the corresponding attack model, e.g., number and usage rate of data processors, volatile memory usage, long-term memory usage, computing time, personnel involvement time, etc. The analytics results data may indicate whether the corresponding attack model successfully detected the particular attack, e.g., the frequency with which attack action detection was successful, how many devices the attack actions were confirmed on, the time it took to confirm an attack action occurred and/or the entire attack occurred. User feedback may include feedback regarding resource usage and/or analytics performance, e.g., whether the attack model is being used, and/or a rating of attack model performance, e.g., a binary or 1-10 value. The resource usage measurements and analytics results data may be gathered over time and for many uses of the computer attack models, e.g., providing averaged performance data values.

The hardware processor 120 executes instructions 136 to update the first set of attack models based on the performance data 152. In the example block diagram 100, the computing device 110 provides the attack model storage 140 device with an updated Set S' 144. In some implementations, the set of attack models is updated by adding, removing, or changing an attack model in the first set. For example, if one of the three example data exfiltration attack models performs significantly worse than the other two, e.g., takes longer, doesn't often successfully identify attacks, etc., that one attack model may be removed from the set of attack models used for data exfiltration attacks. In some situations, a new attack model may be added. This may be done, for instance, if all of the models perform poorly. The new attack model may be predetermined or generated in a variety of ways, e.g., attack actions for a new attack model may use randomization to select attack actions, add attack actions that are similar to those used by other attack models in the set, and/or add attack actions that are not currently used by other attack models in the set.

In situations where an attack model included in the first set 142 is to be changed, the changes may happen in a variety of ways. For example, attack actions may be removed, added, or changed; phases or states may be removed, added, or changed, and in some implementations mappings of attack actions to analytics may be changed. Changing attack actions may include, for example, changing the attack action to be detected, changing the order in which an attack action is evaluated, changing the timing for attack actions, and/or changing a probability used to determine whether the attack action is to be tested.

By way of example, an attack action with a low detection rate may be more likely to be removed from an attack model, while an attack action with a relatively high detection rate that is used in another attack model may be more likely to be added to an attack model. Attack actions having corresponding analytics associated with relatively heavy resource usage may be more likely to be removed from an attack model, while attack actions having corresponding analytics associated with relatively low resource usage may be more likely to stay included in or be added to an attack model. Attack actions that take a longer period of time to evaluate may be more likely to be removed from an attack model, while attack actions that take less time to evaluate may be more likely to stay included in or be added to an attack model. In some situations, an attack action may remain, but the analytics function used to evaluate the attack action may be changed, e.g., the computing device 110 may instruct an analytics mapper to change analytics functions for a particular attack action.

Methods for determining how attack models are added, removed, and/or changed may take a variety of forms. For example, performance data thresholds may be used in a manner designed to ensure certain performance metrics are met, e.g., attack models that take longer than 24 hours to evaluate may be removed from a set of attack models or changed, attack actions that are below a threshold rate of confirmation may be removed from an attack model. Thresholds may be set by a user and/or determined by a computer, e.g., a threshold could be a certain number of standard deviations removed from a median or mean measure of performance. In some implementations, randomization may be used to update attack models. It may not always be able to determine which changes to an attack model would be the best, as attacks are constantly changing, and adding an element of random attack action selection, for example, may result in an increase in attack model performance.

In some implementations, performance data may be weighted such that certain measures of performance are more important than others in determining whether an attack model or attack action performs well relative to others. For example, the amount of time for an attack model to be evaluated may be weighted relatively high, or important, while memory usage may be weighted relatively low, or less important. In situations where weights are used for performance data, the weights may be assigned manually by a user and/or automatically by a computer, e.g., based on expected results from historical attack model performance data. Different types of attack models may be associated with different weights for different types of performance data, e.g., time may be weighted more importantly for a fast moving and harmful types of attack, while time may be weighted as less important for slower moving and/or less harmful types of attacks.

In some implementations, clustering may be used to manage attack models. As noted above, the first set of attack models may be a cluster selected based on characteristics of the attack models and/or attack model performance. In situations where a set of attack models is clustered based on similarity, e.g., similar attack type and number of states, changes to the attack models may be based on features of the cluster. For example, if the cluster performs poorly, changes to an attack model or a new attack model may be based on choosing attack actions that differ from those currently being used by attack models in the cluster. Conversely, if a cluster of attack models performs well, changes or new models may be more limited, e.g., based on using attack actions that are the same as or similar to those that perform well within the cluster.

In situations where clustering is used, whether attack models are added, removed, or changed may depend on the clustering. For example, in some implementations all but one attack model may be removed from each cluster, e.g., resulting in a best performing attack model remaining in each cluster. Clustering may be used to evaluate the performance of different types of attack models that have similar characteristics. For example, attack models that are used to detect different types of attacks may be clustered based on a similarity in the number of states included in the attack models and/or specific attack actions included in the attack models. This may allow for identification of attack actions or attack models that perform particularly well or particularly poorly relative to similar attack models for other types of attacks. This may facilitate identification of particular attack actions that may be useful to add or remove from the attack models.

In some implementations, the first set 142 of attack models is updated in response to a triggering event. A triggering event may be a variety of things, such as user input, a time-based event as in a situation with periodically triggered updates, a resource usage threshold being met, and/or performance data indicating a predetermined triggering condition. For example, updates may be initiated on demand by a system administrator, periodically, in response to attack model system resource usage exceeding a threshold such as a data storage or processor usage threshold. As another example, performance data meeting a threshold, e.g., successful attack detection rate at or below 10%, may be used as a triggering condition to trigger attack model updating.

In some implementations the use of new attack models that were recently added to the attack model data 140 may be a triggering event. As new threats arise, new attack models may be created to address those threats. After the new attack models have been used, the associated performance data may be used to evaluate the attack models to determine whether updates are to take place. As with the original attack models, updated attack models and updated sets of attack models may be used during orchestration of computer attack analytics.

In some implementations, historical data for attack models may be stored, e.g., separately or in the attack model storage 140 and/or attack model performance data 150. Historical data may include attack models that were removed as well as the performance data associated with those attack models. In some implementations, the removal of an attack model may deactivate it in a database, leaving the attack model available for later evaluation, reactivation, and/or re-use. Historical attack models and historical attack model performance data may have a variety of uses. For example, as computing capability and/or analytics efficiency improves, historical attack models that were previously too slow may be able to be performed in a reasonable amount of time, in which case they may be reactivated and/or added to a set of actively used attack models. As another example, use, historical data may be useful when determining changes or additions to be made to attack model sets, e.g., attack models that have already been used need not be repeated, and the performance of particular attack actions may be able to be estimated based on the historical performance, allowing historical performance to be used when determining which attack actions are used when updating attack models.

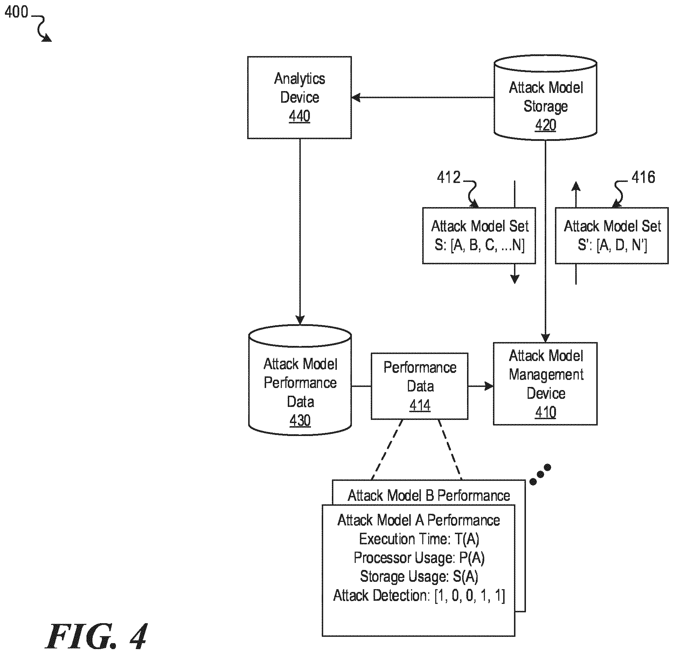

FIG. 4 is a data flow 400 depicting an example of computer attack model management using an attack model management device 410. The attack model management device 410 may be the same as or similar to the computing device 110 of FIG. 1. The analytics device 440 may be a computing device designed to orchestrate computer attack analytics using various attack models that are stored in attack model storage 420; the results and performance of attack model orchestration may be stored in the attack model performance data 430.

During operation, the analytics device 440 may periodically orchestrate analytics on a computing system using attack models. The computing system may include the analytics device 440 and attack model management device 410 or, in some implementations, the computing system may be separate. As noted above, the results of the attack model usage, including performance data, may be stored in the attack model performance data 430.

As depicted in the example data flow, the attack model management device 410 obtains an attack model set S 412 from attack model storage 420. The set S 412 includes several attack models, e.g., A, B, C ... N. The set S 412 may be selected from many sets of attack models in a variety of ways, including in response to one or more triggering events. For example, the attack model management device 410 may be configured to evaluate a particular set of attack model for a particular type of attack once every week or month, and/or in response to any or all of the attack models for a particular type of attack meeting a certain resource usage or successful detection threshold.

The attack model management device 410 obtains performance data 414 from the attack model performance data 430. As noted above, the performance data 414 may include a variety of performance related information for each of the attack models in the set S 412. The example data flow 400 depicts performance data 414 as including information such as attack model execution time, processor usage, storage usage, and successful attack detection statistics. For attack model A, these are represented by T(A), P(A), S(A), and a binary set that indicates whether the attack model was successful (1) or not (0) for each use of the attack model in detecting an attack on a computing system. History of successful attack detection may be recorded separately for each computing system or, in some implementations, multiple uses of the attack model across multiple computing systems may be recorded. Other performance related information not included in the example performance data 414 may also be gathered and used. For example, performance data for the analytics functions associated with each attack action in the attack models may be included in the performance data 414 for evaluating individual attack actions.

The attack model management device 410 updates the attack model set S 412 using the performance data 414. The resulting attack model set S' includes three attack models, e.g., A, D, and N'. As noted above, the manner in which attack models are removed, modified, or added may vary. For example, attack models A and D may have been relatively high performing attack models, e.g., meeting threshold requirements for resource usage and/or attack detection rates, while removed attack models such as B and C may have performed relatively poorly. Attack models that are removed may, in some implementations, be placed in a historical data storage device and/or simply deactivated so they are no longer to be used for detecting attacks.

In the example set S' 416, attack model N was changed to N', which may have been done for a variety of reasons and in a variety of ways. For example, the analytics for one particular phase or attack action in model N may have used an unusually large amount of computing resources and the phase or attack action may have been rarely detected. In this situation, that phase or attack action may be removed or replaced by another attack action.

In some implementations, the number of states or attack actions may be used to cluster attack models within a set. For example, at least two subsets of attack models may be created by clustering attack models based on the number of states or number of attack actions. In this situation, attack models may be compared to one another within their subsets, e.g., in a manner designed to compare attack models to those that are similar. For example, a six-state attack model may be clustered with other attack models with 5-7 states, so as not to be compared with attack models that only have 2-4 states. In implementations where attack models are clustered, updates to the set S 412 may be based on the clusters, e.g., in a manner designed to ensure that at least one attack model is left in each cluster.

In some implementations, clustering may be used in a manner designed to promote more efficient evaluation of attack models. For example, rather than evaluating the performance of every attack model in a set or cluster, the performance of some of the attack models in a cluster of similar attack models may be used to estimate the performance of all of the attack models in a cluster. In some implementations, the performance of unique attack actions within a cluster may be evaluated separately from whole attack model performance. For example, a cluster of 100 attack models may include only 50 different attack actions. Rather than evaluating the performance of the analytics for each attack action and each attack model, performance of attack models may be estimated by evaluating the performance of the analytics for the 50 attack actions, and estimating the performance of each attack model based on the estimated performance of the analytics for the attack actions included in that model.

The updated attack model set S' 416 is provided to the attack mode storage 420 device, where the updated set may be used for further model-driven analytics orchestration, e.g., by the analytics device 440. The periodic updating of the attack models is designed to improve performance of the attack models and the system that runs them. In addition, periodic updates may facilitate detection of changing threats, e.g., as both user input and elements of randomization may be used to update attack models.

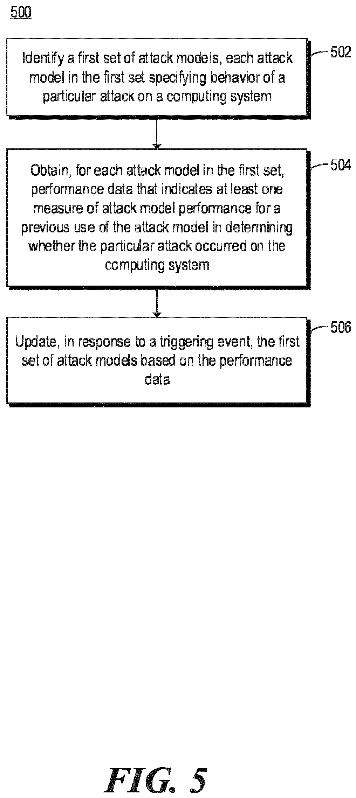

FIG. 5 is a flowchart of an example method 500 for performing computer attack model management. The method 500 may be performed by a computing device, such as a computing device described in FIG. 1. Other computing devices may also be used to execute method 500. Method 500 may be implemented in the form of executable instructions stored on a machine-readable storage medium, such as the storage medium 130, and/or in the form of electronic circuitry, such as a field-programmable gate array (FPGA) or application specific integrated circuit (ASIC).

A first set of attack models is identified, each attack model in the first set specifying behavior of a particular attack on a computing system (502). For example, a first set of attack models may be obtained for data exfiltration attacks, and each attack model may specify several states of a data exfiltration attack and corresponding attack actions that may take place in each state. Each attack model in the first set may be different from each other attack model in the first set.

For each attack model in the first set, performance data is obtained that indicates at least one measure of attack model performance for a previous use of the attack model in determining whether the particular attack occurred on the computing system (504). In the example above, each of the attack models in the first set has previously been used to determine whether a data exfiltration attack has occurred. Performance data may indicate, by way of example, a rate at which the attack models successfully detected previous attacks, false positive rates of the attack models, and an amount of computing resources that were used to perform analytics associated with the attack models.

In response to a triggering event, the first set of attack models is updated based on the performance data (506). The triggering event may be, for example, user input, a time-based threshold being met, a resource usage threshold being met, or performance data indicating a triggering condition, to name a few. The set of attack models may be updated by removing or changing an attack model included in the set. In some implementations, changing the attack model includes removing, adding, or changing at least one attack action specified by the attack model. For example, in response to determining that a particular attack model in the first set performed worse than at least one other attack model in the set, the attack model may be removed from the set or changed. Updates to attack models may be performed in an iterative fashion, e.g., after updated attack model sets have been used by an attack model analytics orchestration device and new performance data is obtained for the updated attack models.

While the method 500 is described with respect to a single computing device, various portions of the methods may be performed by other computing devices. For example, one computing device may be responsible for obtaining performance data for a set of attack models, while a second computing device is responsible for updating the set of attack models.

The foregoing disclosure describes a number of example implementations for computer attack model management. As detailed above, examples provide a mechanism for updating computer attack models in a manner designed to facilitate efficiently securing a computing system.

## Claims

1. A computing device for computer attack model management, the computing device comprising:
a hardware processor; and
a data storage device storing instructions that, when executed by the hardware processor, cause the hardware processor to:
identify a first set of attack models, each attack model in the first set specifying behavior of a particular attack on a computing system;
obtain, for each attack model in the first set, performance data that indicates at least one measure of attack model performance for a previous use of the attack model in determining whether the particular attack occurred on the computing system; and
update the first set of attack models based on the performance data.

2. The computing device of claim 1, wherein the performance data includes at least one of:
resource usage measurements that indicate computing resources used to execute actions specified by the corresponding attack model;
analytics results data that indicates a frequency with which the corresponding attack model successfully detected the particular attack; or
user feedback.

3. The computing device of claim 1, wherein the first set of attack models is updated in response to a triggering event.

4. The computing device of claim 3, wherein the triggering event includes at least one of:
user input;
a time-based threshold being met
a resource usage threshold being met; or
performance data indicating a predetermined triggering condition.

5. The computing device of claim 1, wherein the first set of attack models is updated by at least one of:
adding an attack model to the first set;
removing an attack model from the first set; or
changing an attack model included in the first set.

6. The computing device of claim 1, wherein the first set of attack models is updated by changing an attack model included in the first set, and wherein changing the attack model includes:
removing an attack action from the attack model;
adding an attack action to the attack model; or
changing an existing attack action specified by the attack model.

7. The computing device of claim 1, wherein the instructions further cause the hardware processor to:
determine, based on the performance data that a particular attack model in the first set performed worse than at least one other attack model included in the first set; and
in response to the determination, remove or change the particular attack model.

8. A method for computer attack model management, implemented by a hardware processor, the method comprising:
identifying a first set of attack models, each attack model in the first set specifying behavior of a particular attack on a computing system;
obtaining, for each attack model in the first set, performance data that indicates at least one measure of attack model performance for a previous use of the attack model in determining whether the particular attack occurred on the computing system, the performance data including:
resource usage measurements that indicate computing resources used to execute actions specified by the corresponding attack model; and
analytics results data that indicates whether the corresponding attack model successfully detected the particular attack; and
in response to a triggering event, update the first set of attack models based on the performance data.

9. The method of claim 8, wherein the triggering event includes at least one of:
user input;
a time-based threshold being met
a resource usage threshold being met; or
performance data indicating a predetermined triggering condition.

10. The method of claim 8, wherein the first set of attack models is updated by at least one of:
adding an attack model to the first set;
removing an attack model from the first set; or
changing an attack model included in the first set.

11. The method of claim 8, wherein the first set of attack models is updated by changing an attack model included in the first set, and wherein changing the attack model includes:
removing an attack action from the attack model;
adding an attack action to the attack model; or
changing an existing attack action specified by the attack model.

12. The method of claim 8, further comprising:
determining, based on the performance data that a particular attack model in the first set performed worse than at least one other attack model included in the first set; and
in response to the determination, removing or changing the particular attack model.

13. The method of claim 8, further comprising:
clustering attack models included in the first set to create at least two subsets of attack models, the clustering being based on at least one of performance or attack model characteristics of the attack models in the first set, and optionally:
wherein the first set of attack models is updated by removing at least one attack model from at least one of the at least two subsets.

14. A non-transitory machine-readable storage medium encoded with instructions executable by a hardware processor of a computing device for computer attack model management, the machine-readable storage medium comprising instructions to cause the hardware processor to:
identify a first set of attack models, each attack model in the first set specifying behavior of a particular attack on a computing system;
obtain, for each attack model in the first set, performance data that indicates at least one measure of attack model performance for a previous use of the attack model in determining whether the particular attack occurred on the computing system; and
in response to a triggering event, update the first set of attack models based on the performance data.

15. The storage medium of claim 14, wherein at least one of:
(a) the performance data includes at least one of:
resource usage measurements that indicate computing resources used to execute actions specified by the corresponding attack model; and
analytics results data that indicates a frequency with which the corresponding attack model successfully detected the particular attack; or
user feedback,
(b) the triggering event includes at least one of:
user input;
a time-based threshold being met
a resource usage threshold being met; or
performance data indicating a predetermined triggering condition,
(c) the first set of attack models is updated by at least one of:
removing an attack model from the first set; or
changing an attack model included in the first set,
(d) the first set of attack models is updated by changing an attack model included in the first set, and wherein changing the attack model includes:
removing an attack action from the attack model;
adding an attack action to the attack model; or
changing an existing attack action specified by the attack model, or
(e) the instructions further cause the hardware processor to:
determine, based on the performance data that a particular attack model in the first set performed worse than at least one other attack model included in the first set; and
in response to the determination, remove or change the particular attack model.
